# EUROPÄISCHE PATENTANMELDUNG

(11) **EP 2 744 096 A1**
(43) Veröffentlichungstag der Anmeldung: **18.06.2014**
(21) Anmeldenummer: 12196775.6
(22) Anmeldetag: 12.12.2012
(51) Int. Cl.: H02M 7/48

(54) **Energieversorgungseinrichtung**

(71) Anmelder: Magna Steyr Fahrzeugtechnik AG & Co KG, 8041 Graz (AT)
(72) Erfinder: Stark, Johann, 8302 Nestelbach/Graz (AT)
(74) Vertreter: Rausch, Gabriele

(57) **Zusammenfassung**

Eine Energieversorgungseinrichtung zur Bereitstellung eines mehrphasigen Drehstroms, umfassend zumindest drei Gleichspannungsquellen (1), wobei jede Phase des Drehstroms durch zumindest je eine Gleichspannungsquelle (1) und zumindest je einen, der Gleichspannungsquelle (1) nachgeschalteten einphasigen Wechselrichter (2) gespeist wird, wobei alle Wechselrichter (2) zur Generierung des Drehstroms über eine gemeinsame Synchronisierung (3) angesteuert sind.

## Beschreibung

### Gebiet der Erfindung

Die vorliegende Erfindung betrifft eine Energieversorgungseinrichtung zur Bereitstellung eines mehrphasigen Drehstroms und eine Energieversorgungseinrichtung mit einer Drehstrommaschine.

### Stand der Technik

Energieversorgungseinrichtungen zur Bereitstellung eines mehrphasigen, üblicherweise dreiphasigen Drehstroms sind bekannt. Die bekannten Energieversorgungseinrichtungen benutzen meist eine Gleichspannungsquelle, beispielsweise einen Akkumulator, zusammen mit einem dreiphasigen Wechselrichter, der aus der Gleichspannung ein Drehfeld generiert, das beispielsweise zur Versorgung einer Drehfeldmaschine eingesetzt werden kann.

Derartige Energieversorgungseinrichtungen werden beispielsweise als Energiespeicher für elektrisch angetriebene Fahrzeuge benutzt, wobei jedoch hohe Anforderungen an die bereitzustellende Energie gestellt sind. Bekannt ist auch, dass mehrere Gleichspannungsquellen parallel geschaltet werden können, um eine Gleichspannungsquelle mit höherer Kapazität zu bilden, beispielsweise mehrere Zellen einer Batterie oder auch mehrere Batteriemodule eines Batteriesystems.

Die Parallelschaltung von Gleichspannungsquellen ist aber mit verschiedenen Problemen verbunden. So bilden sich bei Ladungsunterschieden zwischen parallel geschalteten Gleichspannungsquellen hohe und unerwünschte Ausgleichsströme aus. Betriebs-, Fehler- und Kurzschlussströme nehmen zu und werden schwerer kontrollierbar. Auch das Laden der Gleichspannungsquellen wird aufgrund der hohen Ströme schwieriger.

### Zusammenfassung der Erfindung

Es ist eine Aufgabe der Erfindung, Energieversorgungseinrichtungen zur Bereitstellung eines mehrphasigen Drehstroms in dieser Hinsicht zu verbessern und insbesondere eine Energieversorgungseinrichtung anzugeben, die eine hohe Kapazität mit geringen auftretenden Stromstärken vereint.

Eine weitere Aufgabe der Erfindung ist es einen verbesserten Aufbau einer Energieversorgungseinrichtung mit einer Drehstrommaschine anzugeben.

Die Lösung der Aufgabe erfolgt durch eine Energieversorgungseinrichtung zur Bereitstellung eines mehrphasigen Drehstroms, umfassend zumindest drei Gleichspannungsquellen, wobei jede Phase des Drehstroms durch zumindest je eine Gleichspannungsquelle und zumindest je einen, der Gleichspannungsquelle nachgeschalteten einphasigen Wechselrichter gespeist wird, wobei alle Wechselrichter zur Generierung des Drehstroms über eine gemeinsame Synchronisierung angesteuert sind.

Erfindungsgemäß ist daher vorgesehen zur Generierung eines n-phasigen Drehstromes n Gleichspannungsquellen, wie zum Beispiel Akkumulatoren, einzusetzen und für jede der n Gleichspannungsquellen auch je einen der Gleichspannungsquelle zugeordneten einphasigen Wechselrichter in Serie mit der entsprechenden Gleichspannungsquelle anzuordnen.

Um die zur Generierung eines Drehstromes notwendigen zeitlichen Verschiebungen der einphasigen Ausgangssignale der Wechselrichter zu gewährleisten, ist eine geeignete Synchronisierung der Wechselrichter vorzusehen.

Hierdurch ist es möglich hohe Ströme und Leistungen für Verbraucher bereitzustellen, wobei jedoch für jede einzelne Phase des Drehstromes von der Spannungsquelle bis zum Verbraucher vergleichsweise geringe Ströme auftreten, so dass auch die eingesetzten elektrischen Komponenten für geringere Ströme ausgelegt sein können, einfacher zu handhaben sind, einen geringeren Bauraum beanspruchen, leichter sind und geringere Kosten verursachen. Bei Spannungsdifferenzen zwischen den Gleichspannungsquellen kommt es nur zu geringen Ausgleichströmen, da diese über eine Serienschaltung von zwei Lastwiderständen (Wicklungen der Drehstrommaschine) laufen müssen und nicht nur durch die geringen Innenwiderstände der Gleichspannungsquellen bestimmt sind.

Die Erfindung eignet sich insbesondere für dreiphasigen Drehstrom, kann jedoch auch für höherphasige Drehströme bei entsprechenden Phasenverschiebungen eingesetzt werden, zum Beispiel zur Speisung von 6, 9- oder 12-phasigen Drehfeldmaschinen.

Eine erfindungsgemäße Vorrichtung kann beispielsweise auch verwendet werden als Notstromversorgung in einem Krankenhaus, als Stromversorgung von Privat-Haushalten, zur Versorgung einer Starkstromheizung, sowie zur Versorgung von Drehstrommaschinen in Fahrzeugen, insbesondere Kraft-, Wasser-, Luft oder Schienenfahrzeugen. Eine erfindungsgemäße Vorrichtung kann in allen Anwendungen eingesetzt werden, bei welchen ein beispielsweise 3-phasiger Verbraucher über einen Akkumulator gespeist werden soll.

Weiterbildungen der Erfindung sind in den abhängigen Ansprüchen, der Beschreibung sowie den beigefügten Zeichnungen angegeben.

In einer bevorzugten Ausführungsform der erfindungsgemäßen Energieversorgungseinrichtung wird jede Phase des Drehstroms durch zumindest je zwei Gleichspannungsquellen gespeist, wobei jeder Gleichspannungsquelle je ein Wechselrichter nachgeschaltet ist und wobei jeweils alle Serienschaltungen von Gleichspannungsquelle und Wechselrichter die eine gemeinsame Phase speisen, nach den Wechselrichtern parallel geschaltet sind.

Zur Erhöhung des Energieinhaltes werden hiermit nicht einfach die Gleichspannungsquellen selbst parallelgeschaltet, sondern ganze Zweige, aus in Serie geschalteten Gleichspannungsquellen und ihren synchronisierten einphasigen Wechselrichtern, parallel geschaltet.

Besonders bevorzugt werden für die Wechselrichter MOSFET Transistoren eingesetzt. Dadurch kommt es trotz Parallelschaltung der Gleichspannungsquellen über die Wechselrichter zu einem selbststabilisierenden thermischen Verhalten, da die Leitfähigkeit eines überlasteten und somit erwärmten Transistors abnimmt.

Gemäß einer weiteren Ausführungsform ist zumindest eine der Gleichspannungsquellen durch eine Parallelschaltung oder Serienschaltung von zumindest zwei Energiespeichern gebildet. So können beispielsweise parallel geschaltete Batterien oder Batteriemodule als eine Gleichspannungsquelle verwendet werden. Es können auch parallel geschaltete Batteriezellen als Energiespeicher oder als Gleichspannungsquelle eingesetzt werden. Durch eine Parallelschaltung oder Serienschaltung von zumindest zwei Energiespeichern kommt es zu einer Reduktion der auftretenden Ströme, wodurch es ermöglicht ist insbesondere zwischen den Energiespeichern und den Wechselrichtern liegende Schaltelemente und Sicherungen, sowie Leitungsquerschnitte geringer zu dimensionieren. Kleinere Ströme verursachen auch geringere elektromagnetische Störungen und gegebenenfalls höhere Datensicherheit für umliegende Verbraucher.

Bevorzugt erzeugen die Wechselrichter zusammen mit der Synchronisierung einer erfindungsgemäßen Energieversorgungseinrichtung einen mehrphasigen Drehstrom mit variabler Frequenz. Die Wechselrichter sind in ihrer Frequenz variabel einstellbar, um eine Drehzahlregelung einer Drehstrommaschine zu ermöglichen. In anderen Anwendungen einer erfindungsgemäßen Energieversorgungseinrichtung, wie beispielweise einer Stromversorgung oder Notstromversorgung eines Privathaushaltes, kann eine konstante Frequenz der Wechselrichter vorteilhaft sein, beispielsweise eine Frequenz von konstant 50 Hz.

Eine erfindungsgemäße Vorrichtung kann eine beschriebene Energieversorgungseinrichtung und eine Drehstrommaschine umfassen.

Erfindungsgemäß kann in einer Vorrichtung, bestehend aus einer Energieversorgungseinrichtung zur Bereitstellung eines mehrphasigen Drehstroms und einer Drehstrommaschine, vorgesehen sein, dass jede Phase des Drehstroms durch zumindest je zwei Gleichspannungsquellen gespeist wird, wobei jeder Gleichspannungsquelle je ein Wechselrichter nachgeschaltet ist und wobei jede Serienschaltung von Gleichspannungsquelle und Wechselrichter je einen zugeordneten Wicklungszweig der Drehstrommaschine speist.

Hierbei verfügt die Drehstrommaschine über zumindest zwei Wicklungszweige für jede Phase. Diese Wicklungszweige werden voneinander galvanisch getrennt, jedoch synchronisiert gespeist. Dadurch wird erreicht, dass auch Komponenten auf Seiten der Drehstrommaschine für vergleichsweise geringe Ströme ausgelegt sein können und zusammen eine hohe Leistung verarbeiten können.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer Energieversorgungseinrichtung nach dem Stand der Technik.
- Fig. 2: ist ein Schaltbild einer Energieversorgungseinrichtung nach dem Stand der Technik.
- Fig. 3a, 3b: sind Schaltbilder einer erfindungsgemäßen Energieversorgungseinrichtung.
- Fig. 3c: ist ein Schaltbild einer Serienschaltung zweier Energiespeicher mit Wechselrichter.
- Fig. 4: ist eine schematische Darstellung einer erfindungsgemäßen Energieversorgungseinrichtung.
- Fig. 5: ist eine schematische Darstellung einer erfindungsgemäßen Energieversorgungseinrichtung mit einer Drehstrommaschine.
- Fig. 6: ist eine schematische Darstellung einer weiteren erfindungsgemäßen Energieversorgungseinrichtung mit einer Drehstrommaschine.
- Fig. 7: ist eine schematische Darstellung einer weiteren erfindungsgemäßen Energieversorgungseinrichtung mit einer Drehstrommaschine.
- Fig. 8: ist eine schematische Darstellung von zwei Varianten der Wicklungszweige von Drehstrommaschinen.

### Detaillierte Beschreibung der Erfindung

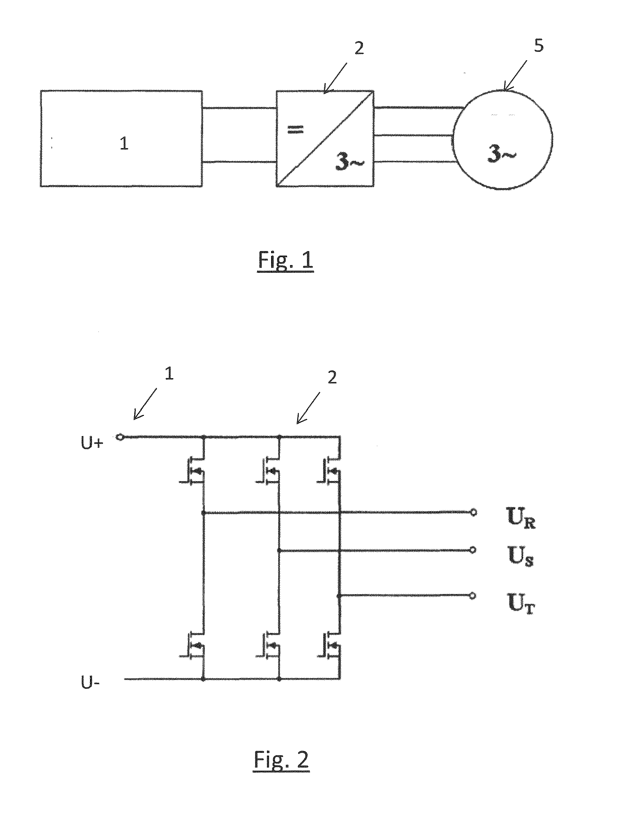

In den Fig. 1 und 2 ist eine Energieversorgungseinrichtung zur Bereitstellung eines dreiphasigen Drehstroms schematisch dargestellt, wie sie aus dem Stand der Technik bekannt ist. Eine Gleichspannungsquelle 1 stellt zwischen ihren Polen mit Klemmenspannungen U+ und U- eine Gleichspannung bereit, die von einem einzigen, dreiphasigen Wechselrichter 2 zu einem dreiphasigen Drehfeld, U_{R}, U_{S}, U_{T} konvertiert wird. Der Wechselrichter 2 kann beispielsweise über MOSFET Transistoren realisiert sein. Pro Phase wird üblicherweise eine Vollbrücke, mit vier Transistoren bzw. MOSFETs eingesetzt. Die Bereitstellung von höheren Energieinhalten, wie sie beispielsweise zum Antrieb eines Fahrzeuges notwendig sind, durch Gleichspannungsquellen höherer Kapazität ist nur bedingt möglich und bewirkt Folgeprobleme.

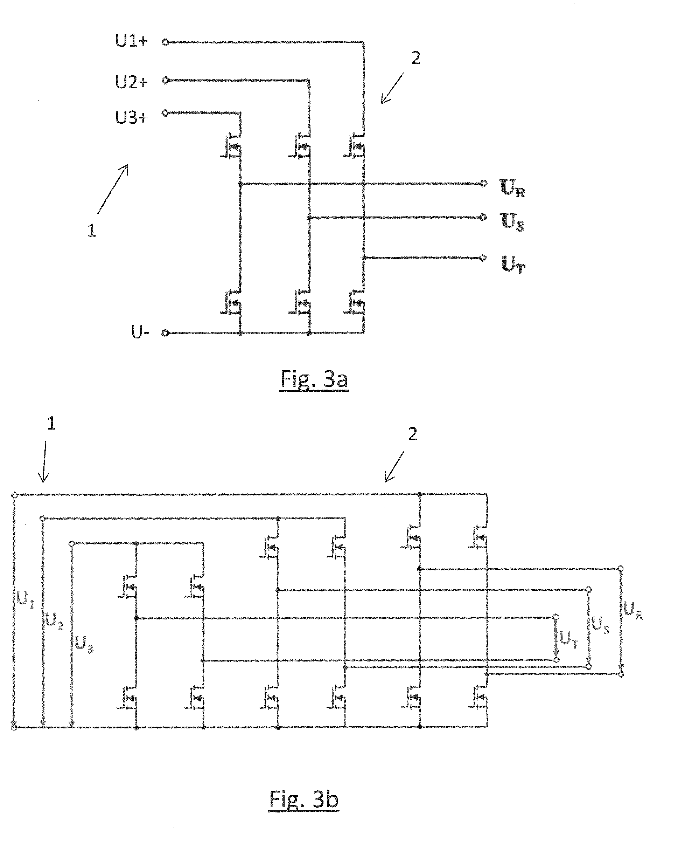

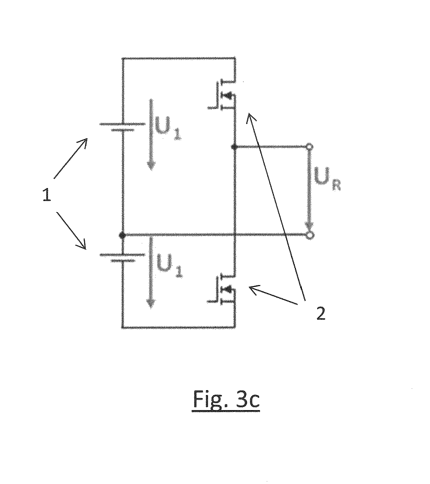

In Fig. 3a ist eine erfindungsgemäße Energieversorgungseinrichtung schematisch dargestellt, in der die Phasenspannungen U_{R}, Us und U_{T} nicht von einem gemeinsamen Wechselrichter abgegriffen werden, sondern jeweils von einzelnen einphasigen Wechselrichtern 2. Zur Energiebereitstellung werden 3 Gleichspannungsquellen 1 verwendet, die gegenüber einem gemeinsamen Bezugspotential U- die Klemmenspannungen U1 +, U2+ und U3+ aufweisen. Eine vollständigere Darstellung des Schaltbildes gem. Fig. 3a ist Fig. 3b, in der die Gleichrichter je Phase als Vollbrücken, gebildet aus jeweils vier MOSFETs, dargestellt sind. Wie in Fig. 3c ausschnittsweise dargestellt, können eine oder auch mehrere der Gleichspannungsquellen 1, durch eine Serienschaltung von beispielsweise zwei Energiespeichern gebildet sein. In diesem Fall kann als Wechselrichter 2 eine Halbbrücke, gebildet aus zwei MOSFETs, eingesetzt werden.

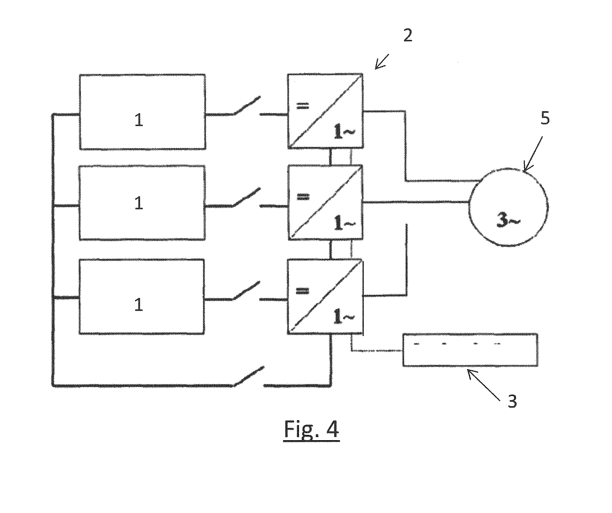

Der Aufbau gem. Fig. 3a und 3b ist schematisch auch in Fig. 4 dargestellt, wobei die Serienschaltungen der drei Gleichspannungsquellen 1 mit den zugeordneten Wechselrichtern 2 gut erkennbar sind. Eine Synchronisierung 3 sorgt für die zeitliche Abstimmung der Ausgänge der drei Wechselrichter 2 zur Erzeugung eines Drehfeldes mit jeweils 120 Grad Phasenverschiebung. Die Frequenz der drei Wechselrichter 2 ist variabel. Die Ausgänge der drei Wechselrichter 2 sind an die Phasen einer Drehstrommaschine 5 angeschlossen. Wie in Fig. 4 ersichtlich kann eine Abschaltung von einzelnen Phasen, zwischen der Gleichstromquelle 1 und dem zugeordneten Wechselrichter 2 der jeweiligen Phase vorgesehen sein.

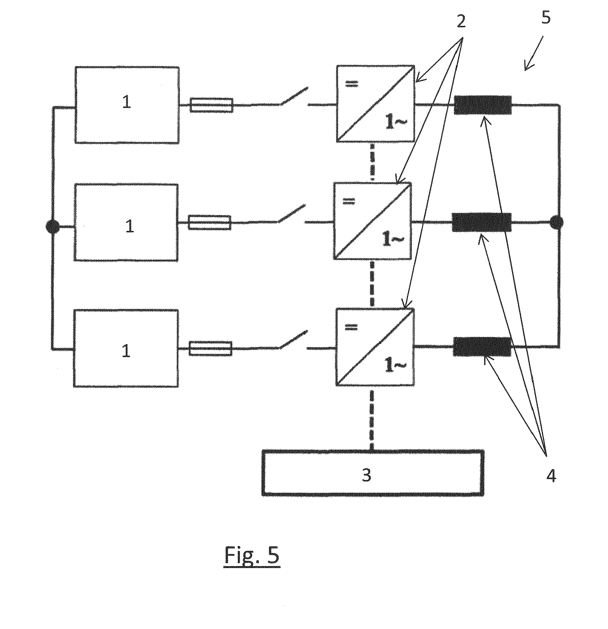

Fig. 5 ist eine schematische Darstellung einer erfindungsgemäßen Energieversorgungseinrichtung gem. Fig. 4 mit einer Drehstrommaschine 5, deren Wicklungszweige 4 mit den Ausgängen der Wechselrichter 2 verbunden sind.

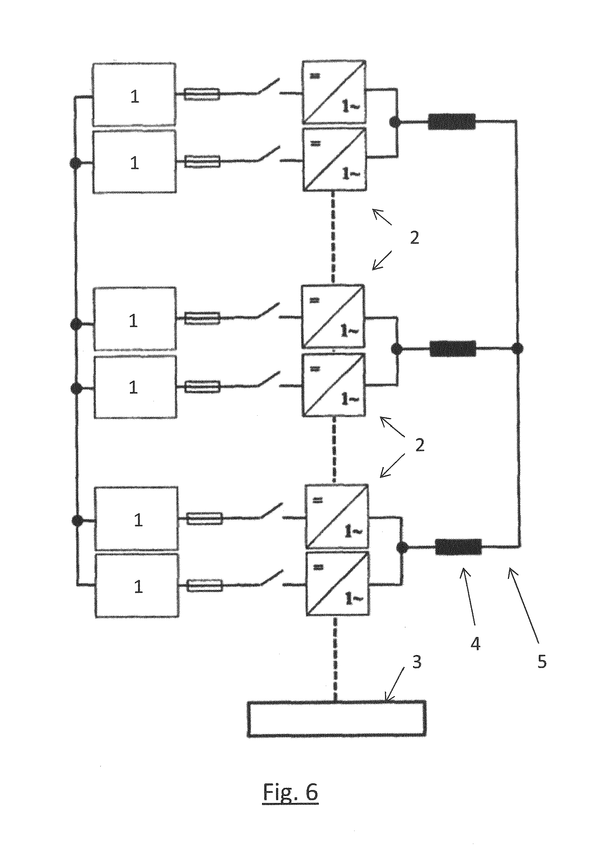

In Fig. 6 ist eine Ausführung einer Energieversorgungseinrichtung gem. Fig. 5 dargestellt, in der jede der drei Phasen durch jeweils zwei Gleichspannungsquellen 1 und zwei Wechselrichter 2 versorgt wird. Jede Gleichspannungsquelle 1 ist mit ihrem Wechselrichter 2 in Serie geschaltet. Nach den Wechselrichtern 2 sind diese beiden Serienschaltungen jeweils parallel geschaltet und versorgen gemeinsam jeweils einen Wicklungszweig 4 der Drehstrommaschine 5. Alle Wechselrichter 2 sind über die Synchronisierung 3 angesteuert.

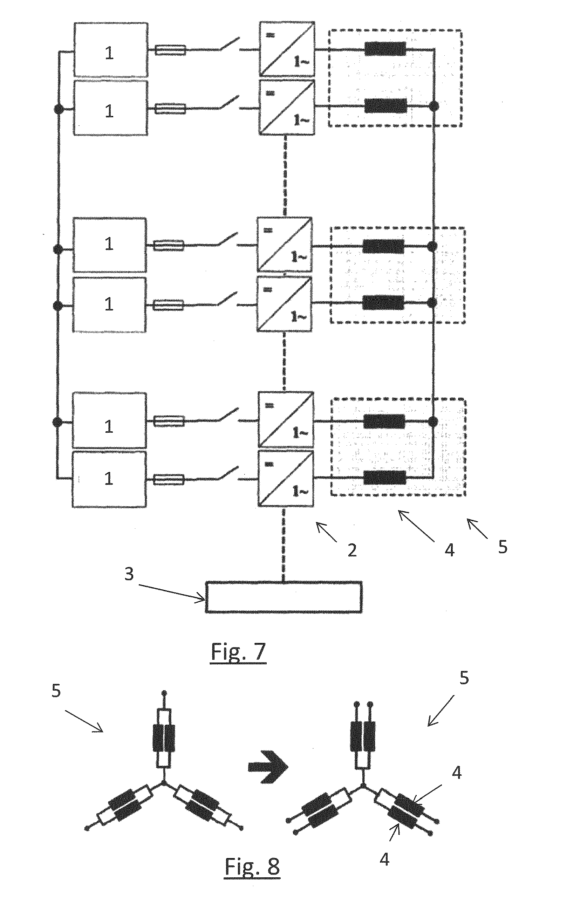

Fig. 7 zeigt eine Ausführungsform der Erfindung, in der die Drehstrommaschine 5 für jede Phase über zwei getrennte Wicklungszweige 4 verfügt. Jeder der insgesamt sechs Wicklungszweige 4 der Drehstrommaschine 5 ist über eine eigene Gleichspannungsquelle 1 und einen eigenen Wechselrichter 2 gespeist.

Fig. 8 zeigt schließlich zwei Varianten der Wicklungszweige von Drehstrommaschinen 5. In der in Fig. 8 links dargestellten Variante sind jeweils zwei Wicklungszweige 4 einer Phase direkt parallel geschaltet, so dass sie über eine Energieversorgungseinrichtung gem. Fig. 5 oder gem. Fig. 6 gespeist werden können. In der Darstellung rechts in Fig. 8 sind die beiden Wicklungszweige 4 jeder Phase aufgetrennt, so dass sie galvanisch getrennt sind, und von einer Energieversorgungseinrichtung mit jeweils 2 Anschlüssen pro Phase, also gem. Fig. 7, gespeist werden kann.

In allen Ausführungsformen der Erfindung kann die Frequenz der Wechselrichter 2 variabel sein oder auch konstant.

Die Erfindung gibt somit eine Energieversorgungseinrichtung an, die eine hohe Kapazität mit geringen auftretenden Stromstärken vereint, und eine verbesserte Energieversorgungseinrichtung mit einer Drehstrommaschine.

### Bezugszeichenliste

- 1: Gleichspannungsquelle
- 2: Wechselrichter
- 3: Synchronisierung
- 4: Wicklungszweig
- 5: Drehstrommaschine

- U+, U-: Klemmenspannungen
- U1 +, U2+ und U3+: Klemmenspannungen
- U1, U2 und U3: Klemmenspannungen
- U_{R}, Uₛ und U_{T}: Phasenspannungen

- =: Gleichspannung
- 1 ∼: einphasige Wechselspannung
- 3 ∼: dreiphasige Wechselspannung

## Patentansprüche

1. Energieversorgungseinrichtung zur Bereitstellung eines mehrphasigen Drehstroms, umfassend zumindest drei Gleichspannungsquellen (1),
**dadurch gekennzeichnet , dass** jede Phase des Drehstroms durch zumindest je eine Gleichspannungsquelle (1) und zumindest je einen, der Gleichspannungsquelle (1) nachgeschalteten einphasigen Wechselrichter (2) gespeist wird, wobei alle Wechselrichter (2) zur Generierung des Drehstroms über eine gemeinsame Synchronisierung (3) angesteuert sind.

2. Energieversorgungseinrichtung nach Anspruch 1,
**dadurch gekennzeichnet , dass** jede Phase des Drehstroms durch zumindest je zwei Gleichspannungsquellen (1) gespeist wird, wobei jeder Gleichspannungsquelle (1) je ein Wechselrichter (2) nachgeschaltet ist und wobei jeweils alle Serienschaltungen von Gleichspannungsquelle (1) und Wechselrichter (2) die eine gemeinsame Phase speisen, nach den Wechselrichtern (2) parallel geschaltet sind.

3. Energieversorgungseinrichtung nach Anspruch 1 oder 2,
**dadurch gekennzeichnet , dass** zumindest eine der Gleichspannungsquellen (1) durch eine Parallelschaltung oder Serienschaltung von jeweils mindestens zwei Energiespeichern gebildet ist.

4. Energieversorgungseinrichtung nach einem der vorgehenden Ansprüche, **dadurch gekennzeichnet , dass** die Wechselrichter (2) zusammen mit der Synchronisierung (3) einen mehrphasigen Drehstrom mit variabler Frequenz erzeugen.

5. Energieversorgungseinrichtung nach einem der vorgehenden Ansprüche mit einer Drehstrommaschine (5).

6. Energieversorgungseinrichtung mit einer Drehstrommaschine (5) nach Anspruch 5,
**dadurch gekennzeichnet, dass** jede Phase des Drehstroms durch zumindest je zwei Gleichspannungsquellen (1) gespeist wird, wobei jeder Gleichspannungsquelle (1) je ein Wechselrichter (2) nachgeschaltet ist und wobei jede Serienschaltung von Gleichspannungsquelle (1) und Wechselrichter (2) je einen zugeordneten Wicklungszweig (4) der Drehstrommaschine (5) speist.
